# FASCICULE DE BREVET EUROPEEN

(11) **EP 0 871 107 B1**
(45) Date de publication et mention de la délivrance du brevet: **13.11.2002**
(21) Numéro de dépôt: 98400829.2
(22) Date de dépôt: 07.04.1998
(51) Int. Cl.: G06F 7/00

(54) **Procédé de traitement d'information en logique floue**
Verfahren zur Informationsverarbeitung in Fuzzy-Logik
Fuzzy logic information processing method

(30) Priorité: 08.04.1997 FR 9704284
(43) Date de publication de la demande: 14.10.1998
(73) Titulaire: STMicroelectronics S.A., 92120 Montrouge (FR)
(72) Inventeur: Le Van Suu, Maurice, 75116 Paris (FR)
(74) Mandataire: Ballot, Paul

(56) Documents cités:
- EP-A- 0 385 387
- US-A- 5 051 932
- TILLI T: "FUZZY-LOGIK IN DER ELEKTRONIK TEIL 3: ABLAUFSTEUERUNGEN" ELEKTRONIK, vol. 43, no. 24, 29 novembre 1994, POING, DE, pages 38-44, XP002050300
- PATENT ABSTRACTS OF JAPAN vol. 015, no. 016 (P-1152), 14 janvier 1991 & JP 02 259906 A (OMRON TATEISI ELECTRON CO), 22 octobre 1990,
- MIZUMOTO M: "State dependent fuzzy controls by fuzzy singleton-type reasoning method" SOFT COMPUTING IN INTELLIGENT SYSTEMS AND INFORMATION PROCESSING. PROCEEDINGS OF THE 1996 ASIAN FUZZY SYSTEMS SYMPOSIUM (CAT. NO.96TH8239), SOFT COMPUTING IN INTELLIGENT SYSTEMS AND INFORMATION PROCESSING. PROCEEDINGS OF THE 1996 ASIAN FUZZY SYSTEMS , ISBN 0-7803-3687-9, 1996, NEW YORK, NY, USA, IEEE, USA, pages 447-452, XP002050301
- JOSSERAN J -F ET AL: "FUZZY COMPONENT NETWORK FOR INTELLIGENT MEASUREMENT AND CONTROL" IEEE TRANSACTIONS ON FUZZY SYSTEMS, vol. 4, no. 4, novembre 1996, pages 476-487, XP000635643

## Description

La présente invention a pour objet un procédé de traitement d'information en logique floue. Elle concerne les systèmes électroniques dans lesquels la gestion des informations est particulièrement complexe et ne peut pas être traitée d'une manière analytique, encore que l'invention pourrait être appliquée également dans ces systèmes. L'invention est par ailleurs plus particulièrement utile dans le cas de systèmes organisés en réseau car elle apporte alors plus de souplesse dans le traitement. De tels systèmes organizés en réseaux sont décrits dans l'article intitulé "Fuzzy Component Network for Intelligent Measurement and Control" de J.F. Josserand et al, parut dans IEEE Transactions on Fuzzy Systems, Vol. 4, N° 4, Novembre 1996, pages 476 - 87, ainsi que dans la demande de brevet europpéenne publiée sous EP-385 387.

Un procédé de traitement d'information en logique floue comporte d'une part l'évaluation de la vraisemblance de l'appartenance de la valeur d'une variable à des fonctions d'appartenance de cette variable, et d'autre part l'élaboration de signaux de décision élémentaires en application de règles du type "si une variable donnée appartient à une fonction d'appartenance donnée, alors le signal de décision élémentaire vaudra un résultat donné". En fin de traitement, une combinaison des différents signaux élémentaires permet d'obtenir un résultat traité applicable sur un organe d'activation ou actionneur du système.

Les organes d'un tel système qui émettent des signaux représentatifs de variables sont principalement des détecteurs, autonomes ou directement placés sur un organe actionneur, des organes de forçage, tel qu'un clavier, ou encore un processeur maître qui prend la main sur le système pour le forcer à agir d'une façon déterminée. Les actionneurs sont généralement des organes moteurs (moteur électrique, relais télécommandé, voire écran de visualisation). Les actionneurs peuvent être néanmoins une partie d'un détecteur lui-même, par exemple son registre d'adresse, quand celui-ci se modifie en fonction d'une assignation qui lui est imposée par un processeur du système. Pour ces raisons, un détecteur pouvant être en partie un actionneur et un actionneur pouvant être en partie un détecteur, on utilisera dans la suite de cet exposé le terme de transmetteur: un organe transmetteur est un organe qui transmet des informations à un autre, à au moins un processeur de logique floue.

Dans un exemple, un système géré selon un procédé de traitement d'information en logique floue est un système de surveillance contre l'intrusion. Dans un tel système il y a des détecteurs de présence pour détecter la présence d'une personne non autorisée à l'intérieur d'un local surveillé. Il peut y avoir également, couplée à cette détection, une détection de température pour signaler par exemple la survenance d'un incendie.

En ce qui concerne les détecteurs de présence, on sait avec des détecteurs en modulation de fréquence reconnaître la présence d'un objet ou d'une personne en mouvement dans un espace surveillé. Cependant, si l'objet en mouvement est anodin, un papillon qui passe devant le détecteur ou un chat qui passe sous un grillage, il convient de ne pas déclencher une alarme intempestivement. Pour résoudre ces problèmes, il est déjà prévu d'effectuer un filtrage local des informations. Par exemple, si un détecteur de présence a détecté une présence à un moment donné et puis qu'il ne la détecte plus par la suite (le papillon est sorti du champ du détecteur), on règle les filtres locaux de façon à ce qu'aucune alarme ne soit transmise. Les filtres peuvent comporter des opérations elles-mêmes complexes.

Par ailleurs, notamment quand le système est en réseau, il peut y avoir beaucoup d'informations à traiter, certaines informations devant être privilégiées par rapport à d'autres. On peut concevoir en effet qu'il est très important de réagir rapidement au dépassement d'une température, significative d'un incendie en un endroit, alors que les opérations simples de gestion sont aussi à effectuer, mais avec un degré d'urgence moindre.

Dans l'état de la technique, il n'y a pas de solution pour remédier à ce problème. Soit on fait du filtrage local et on ne transmet des informations que si elles ont une gravité suffisante. Soit on traite toutes les informations, les unes après les autres, avec les conséquences de retard que cela peut produire.

L'invention a pour objet un procédé de traitement d'informations en logique floue permettant de remédier à ce problème. Un tel procédé de traitement d'information en logique floue est défini dans la revendication indépendante 1. D'autres modes de réalisation de l'invention sont spécifiés dans les revendications dependantes altenantes.

A cet effet, l'invention préconise l'envoi, en même temps que l'information à traiter d'un coefficient de force, terme générique quantifiant l'importance de l'information transmise.

Par exemple, dans le cas du papillon qui pénètre dans le champ du détecteur, on pourra d'une part envoyer une information signalant qu'une détection s'est produite, et d'autre part, envoyer à titre de coefficient de force une valeur d'une variable d'autant plus grande que l'information elle-même a d'importance. Schématiquement le coefficient de force pourra être proportionnel au temps que le papillon est resté dans le champ du détecteur.

Dans l'autre exemple, le coefficient de force, plutôt que d'être mesuré préalablement à son émission, peut être imposé définitivement: des capteurs de température ou des détecteurs d'incendie sont munis d'un coefficient de force maximale, toutes les autres opérations logistiques peuvent être munies d'un coefficient de force moindre.

L'invention propose en effet un procédé de traitement d'informations en logique floue dans un système d'organes montés en réseau dans lequel :
- des transmetteurs envoient des messages à au moins un processeur de logique floue,
- chaque message comportant une information représentative de l'adresse du transmetteur qui envoie le message, une information représentative de l'adresse du processeur de logique floue à qui est destiné le message, et des données représentatives des informations à transmettre,
- le message comprend un coefficient de force indiquant l'importance du message,
- le processeur de logique floue traite les données envoyées sur la base de fonctions d'appartenance et sur la base de règles conditionnelles pour produire un signal traité,
- le processeur de logique floue pondère ledit signal traité par ledit coefficient de force.

Dans une installation en réseau, chaque détecteur ou actionneur se signale par son adresse. Selon un perfectionnement de l'invention, on incorpore le coefficient de force dans l'adresse envoyée par le transmetteur et on organise des classes d'adresses correspondantes.

L'invention sera mieux comprise à la lecture de la description qui suit à l'examen des figures qui l'accompagnent. Celles-ci ne sont données qu'à titre indicatif et nullement limitatif. Les figures montrent :
- figure 1 : une représentation schématique d'un réseau, notamment un réseau domotique, utilisé pour mettre en oeuvre le procédé de l'invention ;
- figure 2 : une représentation schématique d'un signal transmis sur le réseau de la figure 1 ;
- figures 3a et 3b : les modifications de signaux d'adresse pour incorporer le coefficient de force de l'invention.

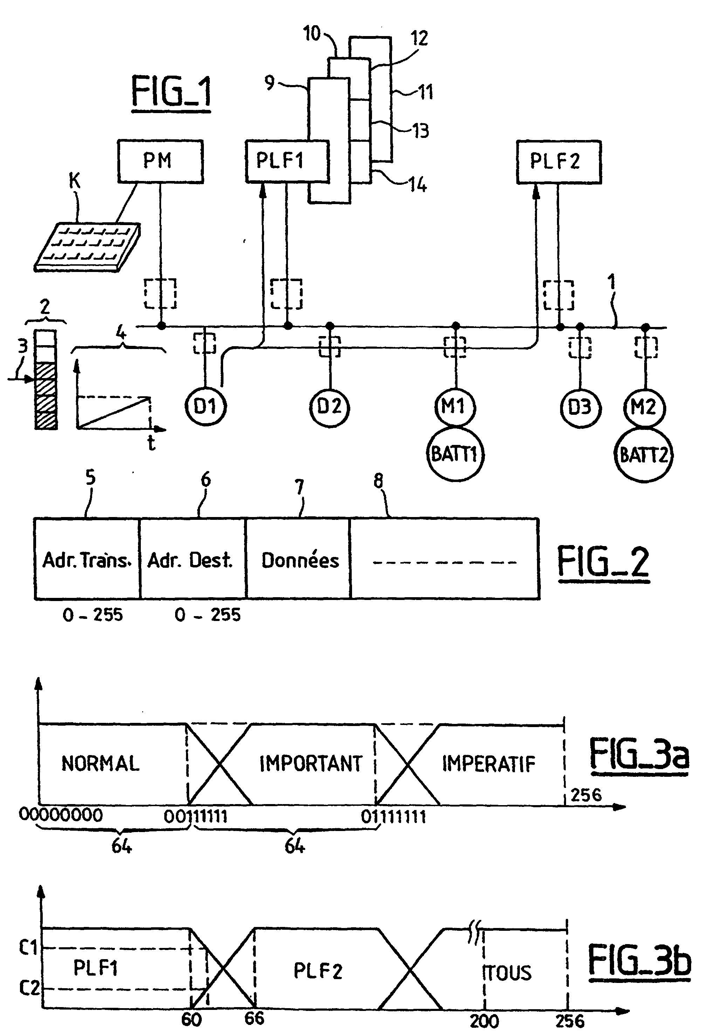

La figure 1 montre un système en réseau utilisable de préférence pour mettre en oeuvre le procédé de l'invention. Dans ce système, on montre essentiellement un canal 1 de transmission du réseau. Le canal 1 permet de relier des détecteurs D1, D2, D3 à des processeurs de logique floue PLF1, PLF2, ainsi qu'à des organes actionneurs (ou moteurs) M1 ou M2. En variante les actionneurs sont des lots de batteries BATT1 et BATT2 qui sont en cours de chargement par connexion au secteur électrique et dont la surveillance est ainsi organisée. Les processeurs de logique floue PLF1 et PLF2 peuvent par ailleurs être directement reliés aux actionneurs, les moteurs M1 et M2, qu'ils commandent respectivement. Cependant, il est aussi possible qu'ils leurs soient reliés par l'intermédiaire du canal 1.

Le canal 1 peut être un canal radio-fréquence, par infrarouge, acoustique, par paires torsadées. Il est de préférence un canal du type courant porteur. Chacun des organes désignés est relié à ce canal 1 par une interface, montrée schématiquement par un petit rectangle en tirets à chaque fois. Dans une précédente demande de brevet, n°97 01897 déposée le 18 février 1997, on a décrit un procédé et un dispositif dans lequel les interfaces étaient mêmes inutiles. Les processeurs de logique floue PLF1, PLF2, accolés directement aux actionneurs étant capables, bien que non construits dans ce but, de traiter toutes les opérations de l'interface avec le réseau.

L'avantage de constituer un réseau avec tous ces organes est bien entendu de pouvoir disposer chacun d'eux à l'endroit le plus adéquat, là où il sera le mieux protégé ou le plus efficient.

On montre encore un processeur maître PM dont le rôle est de permettre la paramétrisation des organes du réseau, notamment au moyen d'un clavier K. La fonction du processeur PM sera vue plus loin. Le processeur PM est relié au réseau avec les mêmes moyens que les autres organes.

Un détecteur, par exemple le détecteur D1, produit une information 2 dont la valeur dépend d'une mesure effectuée par ce détecteur. Par exemple, si le détecteur est un détecteur de présence, il produit un signal dont la valeur est située au-dessus ou en-dessous d'un seuil 3. Dans l'invention, plutôt que de n'envoyer l'information 2 que si elle dépasse le seuil 3, on décide d'envoyer un coefficient de force 4 en plus de l'information 2 (on supprime de ce fait le filtrage local). Le coefficient de force peut être, comme schématiquement représenté, le résultat d'une intégration, dans un intégrateur du détecteur 1, du signal 2 disponible dans le détecteur 1.

Comme indiqué ci-dessus, le coefficient de force peut aussi être imposé au capteur. Par exemple un capteur de température disposé dans une pièce où sont entreposés des produits dangereux sera affecté d'un coefficient de force élevé alors qu'un autre, situé en un endroit non sensible, sera affecté d'un coefficient de force plus faible. Dans les deux cas ce coefficient de force ne sera pas mesuré mais imposé par construction.

Dans un autre cas, s'agissant du processeur PM, le coefficient de force sera constitué par une manoeuvre effectuée sur le clavier K, ou par un programme exécuté par ce processeur PM.

Selon l'invention, les données 2 et les coefficients de force 4 sont envoyés au processeur de logique floue PLF1 ou PLF2 de manière à ce que ces processeurs effectuent leur traitement en conséquence. La transmission de l'information 4 en sus de l'information 2 aux processeurs de logique floue PLF1 et PLF2, peut être organisée de multiples façons. Par exemple, le détecteur D1 envoie en alternance l'information de type 2 et l'information de type 4, d'une manière systématique. Les processeurs PLF1 et PLF2, une fois synchronisés, sont capables de les reconnaître et de les traiter en conséquence.

D'une manière préférée, montrée sur la figue 1, les détecteurs et tous les autres organes sont montés en un réseau. Dans ce cas, le canal de transmission 1 étant unique, au moins sur une partie, il importe que chacun émette sur le réseau en envoyant un message représenté par exemple sur la figure 2. Un tel message comporte, au delà des informations à usage des interfaces qui en permettent la décapsulation, une information 5 représentative de l'adresse dans le réseau de l'organe qui transmet l'information, une information 6 représentative de l'adresse de l'organe à qui est destiné l'information, et des données 7 représentatives des informations à transmettre, notamment de l'information 2.

Le message peut comporter par ailleurs d'autres parties 8 à but divers, notamment un accusé de réception d'un message précédent ou autre.

Pour simplifier l'explication, on a admis que l'adresse du transmetteur serait codée sur un octet et donc correspondrait à une valeur comprise entre 0 et 255. Il en est de même de l'adresse de destination 6.

La figure 3a illustre une manière préférée de transmettre le coefficient de force. Dans la figure 3a le coefficient de force est incorporé à l'adresse transmetteur. Dans un exemple, il n'y a que 64 origines possibles pour les informations à transmettre. De ce fait, seulement 6 bits sont nécessaire pour identifier l'origine des informations. Sur un octet, les allures des adresses de départ sont donc du type 00000000 à 00111111. Cette manière de faire laisse inutilisés les 2 bits de poids forts (ou autres) de l'octet déterminé dans l'exemple.

Selon l'invention, on convient alors que, si les 2 bits de poids forts sont à 00, le coefficient de force a un caractère normal. Si les deux bits de poids forts, au lieu d'être 00, sont 01, on considérera que le coefficient de force indique que la valeur de l'information est importante. Si enfin les deux bits de poids forts sont 1 0, voire même 1 1, on considérera que la valeur de l'information est impérative et nécessite un traitement d'une part immédiat et ou d'autre part sans condition. Ce faisant on a, pour chaque adresse, créé trois classes d'adresses: la classe "NORMAL", la classe "IMPORTANT", la classe "IMPERATIF".

Il est évident que l'on aurait pu d'une part créer plus de classes et d'autre part, notamment en retenant plus qu'un octet pour désigner l'adresse, avoir plus que 64 organes sur le réseau. Ainsi, une transmission provenant du détecteur D1, dont l'adresse est par exemple 21, 00010101 en binaire, sera considéré comme relative à une transmission normale si les deux bits de poids forts sont 00. Pour la même adresse, mais avec des bits de poids forts de l'adresse différents, le sens des données transmises sera qu'elles seront jugées importantes voire impératives.

Il n'est pas nécessaire que les bits distinctifs dans l'adresse du coefficient de force soient les bits de poids forts. Si ce sont par exemple les bits de poids faibles, on obtiendra pour chaque organe du réseau, N adresses contigües qui en sont représentatives. Le nombre de bit utilisés, exposant 2, est égal au nombre N.

La figure 3b montre, d'une manière duale, le codage du coefficient de force non plus dans l'adresse du transmetteur, mais dans l'adresse de l'organe de destination. Ceci est par exemple le cas des messages envoyés par le processeur maître PM. Ce processeur maître PM peut envoyer un message à destination des processeurs de logique floue PLF1 ou PLF2. Selon ce qui a été indiqué précédemment, on retiendra pour désigner l'adresse destination, soit une adresse correspondant uniquement au processeur PLF1, soit une autre correspondant au processeur PLF2.

Si on veut avec le processeur PM commander en même temps les processeurs PLF1 et PLF2, on utilisera une adresse commune à ces deux processeurs. Comme on l'a expliqué précédemment, il peut exister des plages d'adresses contigües pour désigner des organes différents. Dans le présent perfectionnement, les plages d'adresses ne sont plus contigües, mais sont même en recoupement. Par exemple, si une valeur d'adresse destination comprise entre 0 et 60 est affectée au processeur PLF1 et qu'une adresse supérieure à 66 soit consacrée au processeur PLF2, on peut accepter qu'une adresse comprise entre 61 et 65 désigne l'un et l'autre de ces deux processeurs.

On peut même pour ces recoupements prévoir des coefficients de vraisemblance différent de 1. Dans l'exemple de la figure 3b, on a prévu des coefficients de vraisemblance respectivement C1 et C2 correspondant à une forme en trapèze des fonctions d'appartenance PLF1 et PLF2.

Il est donc possible à partir de l'un quelconque des organes connectés au canal 1 de s'adresser à un ou plusieurs des organes connectés au canal 1. Dans l'exemple de la figure 3b, on a dans ce but admis que si l'adresse destination était par exemple supérieure à 200, elle concernait tous les organes du réseau. Dans ce cas, dans chaque processeur flou, il y a une fonction d'appartenance TOUS stockée en mémoire qui permet d'accepter le message.

Bien entendu, il est possible de coupler les effets indiqués en référence sur la figure 3a, avec ceux indiqués en référence sur la figure 3b. Ainsi, le processeur maître PM peut envoyer un message à caractère impératif à un, plusieurs, ou tous les autres organes du réseau 1.

Un processeur de logique floue, par exemple le processeur PLF1, comporte une mémoire 9 de fonctions d'appartenance ainsi qu'une mémoire 10 de règles. Dans la mémoire 9 de fonctions d'appartenance, sont mémorisées des tables. Dans l'exemple, ces tables sont des tables recevant en entrée l'octet d'adresse et délivrant en sortie une information représentative d'une part de la fonction d'appartenance concernée (par exemple NORMAL, IMPORTANT ou IMPERATIF) et d'autre part une information représentative du coefficient d'appartenance de la variable mesurée à cette fonction d'appartenance (par exemple les coefficients C1 et C2).

Par exemple l'adresse 21, pour le détecteur D1, aura comme correspondant dans les tables de fonctions d'appartenance de la mémoire 9, une information NORMALE avec un coefficient d'appartenance 1, si les deux bits de poids forts sont 00, une signification IMPORTANTE avec un coefficient d'appartenance 1, si les deux bits de poids forts sont 01, et ainsi de suite.

Les règles stockées dans la mémoire 10, dans leur particularité relative à l'invention, comporteront des conditions du type :
- si la transmission du message est NORMALE, alors..., ou
- si la transmission du message est IMPORTANTE, alors..., ou
- si le caractère du message est IMPERATIF, alors... .

En ce qui concerne la figure 3b, dans la mémoire 9 du processeur PLF1, ne sera enregistrée, normalement, que la fonction d'appartenance relative aux adresses désignant PLF1, que ces adresses désignent PLF1 seul ou soient communes à PLF1 et à l'un quelconque des autres organes connectés au réseau. La fonction d'appartenance relative aux adresses génériques correspondant au cas où le message est distribué à tout le monde est également enregistrée dans la mémoire 9 du processeur PLF1. Les règles de la mémoire 10 du processeur PLF1 comporteront alors des règles du type
- si adresse correspondant à PLF1, alors... .

Le processeur de logique floue PLF1 comporte encore des circuits il pour pondérer le signal traité par le coefficient de force reçu. En pratique, les résultats élémentaires produits par l'application des règles 10 sont composés dans un circuit 11 selon au moins deux modes connus. D'une part ils peuvent être composés selon le mode produit, et d'autre part selon le mode du minimum. Dans le mode produit, on multiplie entre eux tous les coefficients d'appartenance impliqués par une règle et on obtient des résultats élémentaires. On somme ensuite ces résultats élémentaires entre eux, éventuellement on en fait la moyenne. Dans le mode du minimum, on prend comme résultat d'une règle le minimum des coefficients des fonctions d'appartenance impliquées par la règle. On en fait ensuite la somme, moyennée ou non.

Dans le cas de la pondération par le coefficient de force selon l'invention, on peut choisir, par exemple dans le cas où le mode impératif est reconnu, de remplacer tous ces coefficients par une valeur 1: l'ordre devant être exécuté de toute façon sans entrer en concurrence avec d'autres considérations. En variante, on peut utiliser le coefficient de force comme un coefficient pondérateur direct du résultat que l'on aurait obtenu sans l'apport de l'invention. Tout autre moyen de combinaison est également envisageable. En pratique, pour une transmission à caractère normal, le coefficient de force pourra valoir 1, il pourra valoir 3 si c'est important, et 10 si c'est impératif.

D'une manière alternative, la pondération pourra même impliquer selon les cas, l'utilisation d'un premier jeu de règles, d'un deuxième jeu de règles ou d'un troisième jeu-de règles désigné par un coefficient de force à trois fonctions d'appartenance.

L'invention peut être plus particulièrement mise en oeuvre dans le cas de la demande de brevet citée ci-dessus où les processeurs de logique floue opèrent en deux temps. Dans un premier temps, ils traitent les adresses (notamment pour savoir s'ils sont destinataires du message). Dans un deuxième temps, ils traitent les données. Dans le cas de la présente invention, du fait que le coefficient de force est incorporé dans l'adresse, il est traité dès le début, ce qui est nettement favorable, notamment lorsqu'il s'agit de diffuser un message à tous les organes.

## Revendications

1. Procédé de traitement d'informations en logique floue dans un système d'organes montés en réseau dans lequel :
- des transmetteurs envoient des messages à au moins un processeur de logique floue, **caractérisé en ce que**
- chaque message comporte une information (5) représentative de l'adresse du transmetteur qui envoie le message, une information (6) représentative de l'adresse du processeur de logique floue à qui est destiné le message, et des données (7) représentatives des informations à transmettre,
- le message comprend un coefficient de force indiquant l'importance du message,
- le processeur de logique floue traite les données envoyées sur la base de fonctions d'appartenance et sur la base de règles conditionnelles pour produire un signal traité,
- le processeur de logique floue pondère ledit signal traité par ledit coefficient de force.

2. Procédé selon la revendication 1, **caractérisé en ce que** le coefficient de force est mesuré.

3. Procédé selon la revendication 1, **caractérisé en ce que** le coefficient de force est imposé par construction et affecté au transmetteur.

4. Procédé selon l'une des revendications 1 à 3, **caractérisé en ce que** le coefficient de force est codé dans l'adresse du transmetteur qui envoie le message ou dans celle du processeur de logique floue à qui est destiné le message.

5. Procédé selon l'une des revendications 1 à 4, **caractérisé en ce que** le processeur de logique floue pondère le signal traité en le multipliant par le coefficient de force.

## Claims

1. Method of processing fuzzy-logic information in a system of components mounted in a network in which:
- transmitters send messages to at least one fuzzy-logic processor, **characterised in that**
- each message contains an item of information (5) representing the address of the transmitter which sends the message, an item of information (6) representing the address of the fuzzy-logic processor for which the message is intended, and data (7) representing information to be transmitted,
- the message comprises a strength coefficient indicating the importance of the message,
- the fuzzy-logic processor processes the data sent on the basis of membership functions and on the basis of conditional rules in order to produce a processed signal,
- the fuzzy-logic processor weights the said processed signal by means of the said strength coefficient.

2. Method according to Claim 1, **characterised in that** the strength coefficient is measured.

3. Method according to Claim 1, **characterised in that** the strength coefficient is imposed by design and allocated to the transmitter.

4. Method according to one of Claims 1 to 3, **characterised in that** the strength coefficient is coded in the address of the transmitter which sends the message or **in that** of the fuzzy-logic processor for which the message is intended.

5. Method according to one of Claims 1 to 4, **characterised in that** the fuzzy-logic processor weights the processed signal by multiplying it by the strength coefficient.

## Patentansprüche

1. Verfahren zur Informationsverarbeitung in Fuzzy-Logik in einem System von Elementen, die in einem Netz eingebaut sind, worin: Sender Nachrichten an wenigstens einen Fuzzy-Logik-Prozessor übertragen, **dadurch gekennzeichnet, daß**,
- jede Nachricht eine Information (5), welche die Adresse des Senders darstellt, welcher die Nachricht überträgt, eine Information (6), welche die Adresse des Fuzzy-Logik-Prozessors darstellt, an den die Nachricht gerichtet ist, und Daten (7), welche die zu übermittelnden Informationen darstellen, enthält,
- die Nachricht einen Wichtungskoeffizienten enthält, der die Wichtigkeit der Nachricht anzeigt,
- der Fuzzy-Logik-Prozessor die übermittelten Daten auf der Grundlage von Zugehörigkeitsfunktionen und auf der Grundlage von Bedingungsregeln verarbeitet, um ein verarbeitetes Signal zu erzeugen,
- der Fuzzy-Logik-Prozessor das verarbeitete Signal mit dem Wichtungskoeffizient gewichtet.

2. Verfahren nach Anspruch 1, **dadurch gekennzeichnet, daß** der Wichtungskoeffizient gemessen wird.

3. Verfahren nach Anspruch 1, **dadurch gekennzeichnet, daß** der Wichtungskoeffizient durch die Konstruktion festgelegt ist und dem Sender zugeordnet ist.

4. Verfahren nach einem der Ansprüche 1 bis 3, **dadurch gekennzeichnet, daß** der Wichtungskoeffizient in der Adresse des Senders kodiert ist, der die Nachricht übermittelt, oder in der des Fuzzy-Logik-Prozessors, für den die Nachricht bestimmt ist.

5. Verfahren nach einem der Ansprüche 1 bis 4, **dadurch gekennzeichnet, daß** der Fuzzy-Logik-Prozessor das verarbeitete Signal gewichtet, indem er es mit dem Wichtungskoeffizient multipliziert.
